Europäisches Patentamt

European Patent Office

Office européen des brevets

(19)

(11) Publication number: 0 401 960
A2

## (12) EUROPEAN PATENT APPLICATION

(21) Application number: 90302924.7

(51) Int. Cl.⁵: G06F 1/16

(22) Date of filing: 19.03.90

The title of the invention has been amended (Guidelines for Examination in the EPO, A-III, 7.3).

(30) Priority: 18.03.89 JP 67273/89

(43) Date of publication of application:
12.12.90 Bulletin 90/50

(84) Designated Contracting States:
DE FR GB

(71) Applicant: SEIKO EPSON CORPORATION
4-1, Nishishinjuku 2-chome
Shinjuku-ku Tokyo(JP)

(72) Inventor: Kitabayashi, Ikuaki
c/o Seiko Epson Corporaton, 3-5 Owa
3-chome
Suwa-shi, Nagano-ken(JP)

(74) Representative: Caro, William Egerton et al
J. MILLER & CO. Lincoln House 296-302 High
Holborn
London WC1V 7JH(GB)

(54) Data processing apparatus with a slot for an additional board.

(57) Data processing apparatus having a slot (16) for receiving an additional optional board (18) includes both a high speed signal line and a low speed signal line connected to a slot circuit (7). A switching device (17, 19, 20, 21, 22) is provided for selectively switching between the high speed signal line and the low speed signal line for output.

FIG. 2

EP 0 401 960 A2

# DATA PROCESSING APPARATUS

The present invention relates to data processing apparatus having a slot for accommodating an additional optional board.

Some types of data processing apparatus operate normally only at a specified clock rate dependent on the software or peripheral equipment employed. In order to ensure compatibility with such known apparatus, it is usual for an additional optional board to be received in a slot (hereinafter referred to as a low speed slot) having a connection with a signal line (hereinafter referred to as a low speed signal line), which is operable at the above clock rate.

On the other hand, when an optional board which operates at a high speed, for example a RAM board, is to be connected to the apparatus, a separate slot (hereinafter referred to as a high speed slot) having a connection with a signal line (hereinafter referred to as a high speed signal line), which is operable at a high speed, has to be provided.

Accordingly, if the high speed operation is to be realised with the known data processing apparatus, it is necessary to provide both the low speed slot for the conventional optional board and the separate high speed slot for the RAM board. As a result, the overall size of the apparatus is increased.

It is an object of the present invention to provide data processing apparatus which can accept either the conventional optional board or the high speed optional board and which can still have a relatively small size.

According to the present invention, there is provided data processing apparatus having a slot for accommodating an additional removable optional board, and characterised by a high speed signal line and a low speed signal line connected to a slot interface, and switching means for selectively switching between said high speed signal line and said low speed signal line for output.

Thus, when a high speed optional board is to be received in the slot, the high speed signal line is selected by the switching means and, when a low speed optional board is to be received in the slot, the low speed signal line is selected.

The present invention will be described further, by way of example, with reference to the accompanying drawings, in which:-

Figure 1 is a perspective view of a switching mechanism and an optional board slot employed in one embodiment of data processing apparatus according to the present invention;

Figure 2 is a block diagram showing the connection of signal lines to the optional board slot in the data processing apparatus according to the present invention;

Figure 3 is a perspective view of an item of electronic equipment to which the invention may be applied; and

Figure 4 is a block diagram showing the system configuration of the electronic equipment of Figure 3.

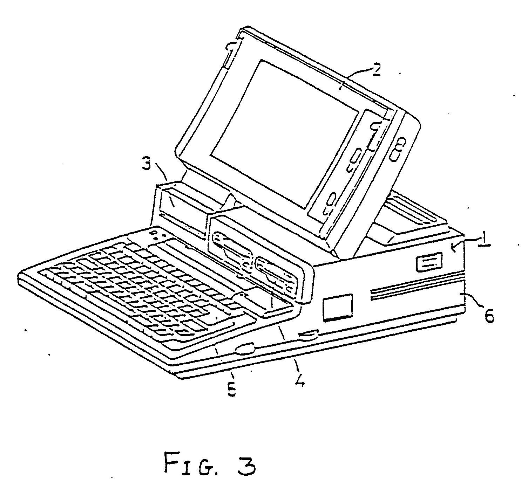

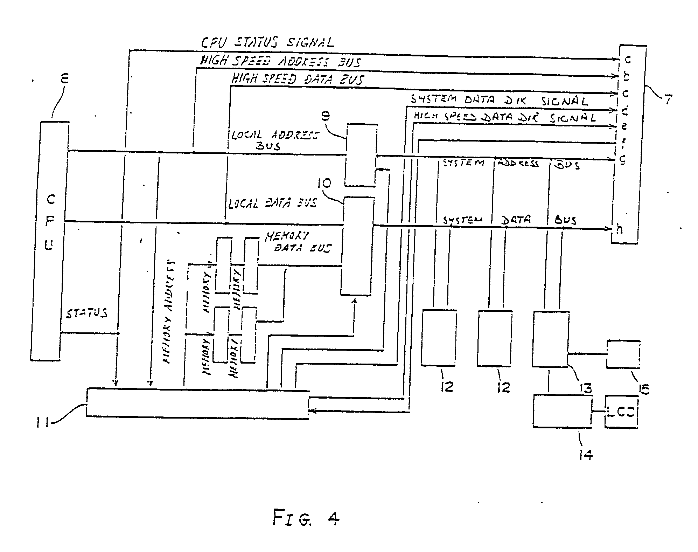

First, the overall configuration of electronic equipment including data processing apparatus according to the invention will be explained with reference to Figures 3 and 4. In the electronic equipment shown in Figure 3, a liquid crystal display 2 is supported on a main body 1 by an arm 3 at one side of the main body, and a floppy disk drive 4 is arranged at a position viewable by an operator. A data entry device 5 in the form of a keyboard is arranged at a front side of the main body 1, and an additional optional board receptacle 6 is arranged at a rear side of the main body 1. The data processing apparatus of the present invention is accommodated in the additional optional board receptacle 6.

The data processing apparatus includes an optional board slot circuit 7, a CPU 8, an address bus controller 9, a data bus controller 10 and a system controller 11, as shown in Figure 4.

The CPU 8 is arranged to supply a status signal to an input terminal a of the optional board slot circuit 7. The CPU 8 and the address bus controller 9 are connected to one another by way of a local address bus, from which a high speed address bus leads to an input terminal b of the optional board slot circuit 7. The CPU 8 and the data bus controller 10 are connected to one another by way of a local data bus, from which a high speed data bus leads to an input terminal c of the optional board slot circuit 7. Further, the system controller 11 is arranged to supply a system data DIR signal and a high speed data DIR signal, respectively, to input terminals d and e of the optional board slot circuit 7. The system controller 11 comprises a memory controller, and a separate line is provided between the system controller 11 and each of the address bus controller 9 and the data bus controller 10 for the purpose of synchronising the system operation. Further, a system address bus is provided between the address bus controller 9 and an input terminal g of the optional board slot circuit 7, and a system data bus is provided between the data bus controller 10 and an input terminal h of the optional board slot circuit 7. In use, a high speed signal from the CPU 8 is supplied to the address bus controller 9 and the data bus controller 10 and is latched therein by flip-flops for providing the outputs to the input terminals g and h of the optional board slot circuit 7. Accordingly, the local address and local data buses and the system address and system data buses have different time axes.

The system of the equipment shown in Figure 3 further comprises I/O devices 12 and a CRT controller 13, which cannot be accessed at high speed and which are connected to the system address bus and the system data bus. An LCD controller 14 and a monitor device 15 are connected to the CRT controller 13.

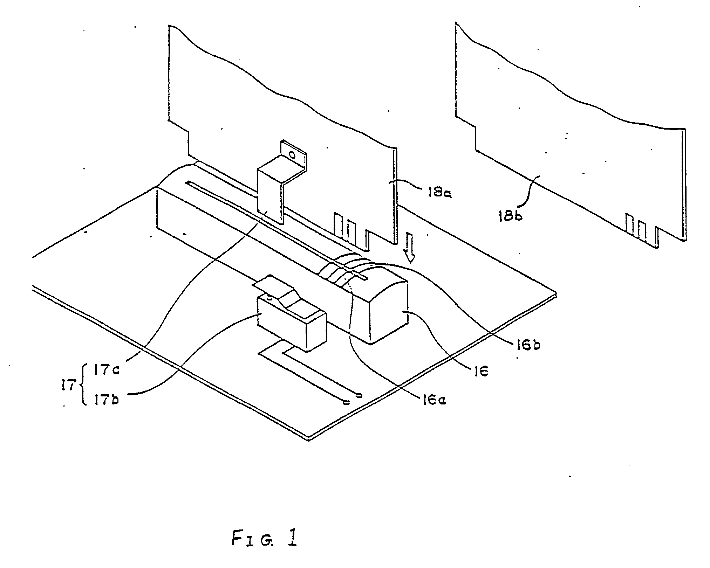

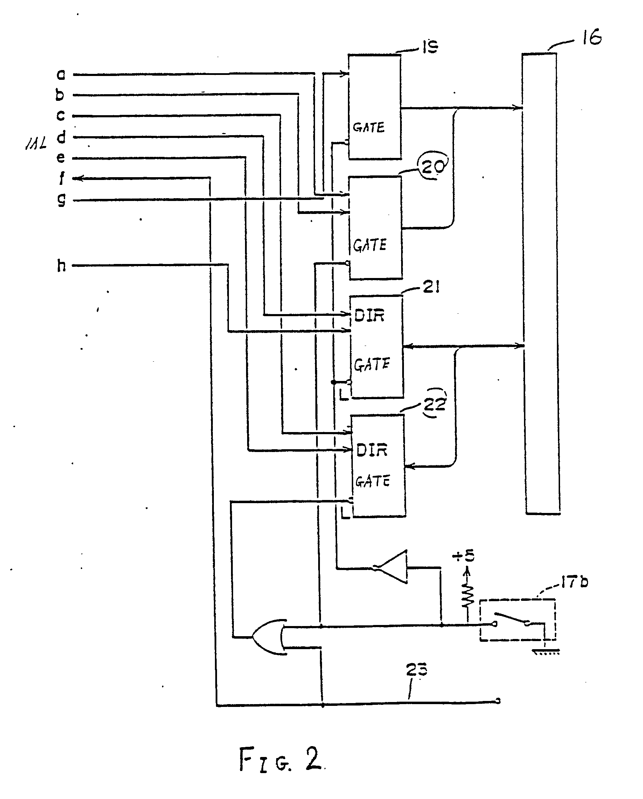

Referring now to Figures 1 and 2, a switching mechanism of the data processing apparatus, and an example of the optional board slot circuit 7 of the data processing apparatus for effecting selective signal line connection to an additional optional board will be explained.

The data processing apparatus has a slot 16 for receiving an additional optional board, electrodes 16a, 16b for the supply of signals from a high speed signal line and a low speed signal line connected thereto, and a switching mechanism 17 for switching between the signal lines. An additional optional board 18 is to be mounted in the optional board slot 16. The optional board 18 may be either an optional board 18a, which uses high speed signals (and is hereinafter referred to as a high speed optional board), or a conventional optional board 18b, which uses low speed signals (and is hereinafter referred to as a low speed optional board). The switching mechanism 17 comprises a micro-switch 17b arranged in the vicinity of the optional board slot 16. A member 17a is attached to a side plane of the high speed optional board 18a such that insertion of the high speed optional board 18a into the optional board slot 16 causes the member 17a to engage and close the micro-switch 17b. On the other hand, the low speed optional board 18b has no member 17a and so the micro-switch 17b remains open when the low speed optional board 18b is inserted into the optional board slot 16.

Figure 2 shows the configuration of the optional board slot circuit 7, incorporating the slot 16, and the micro-switch 17b. The signals from the system are supplied firstly to the optional board slot 16 through address bus selectors 19 and 20 and data bus selectors 21 and 22, and thence to the additional optional board 18 through the electrodes 16a and 16b of the optional board slot 16. The signal from the micro-switch 17b is supplied to gates of the address bus selector 19 and the data bus selector 21 by way of an inverter, to a gate of the address bus selector 20 directly, and to a gate of the data bus selector 22 by way of an OR gate. The OR gate receives a further input from a line 23.

More especially, the system address bus is connected through the terminal g of the optional board slot circuit 7 to the address bus selector 19, and the high speed address bus is connected through the terminal b to the address bus selector 20. The CPU status signal is supplied to the address bus selector 20 from the terminal a. The system data bus is connected through the terminal h to the data bus selector 21, and the system data DIR signal is supplied from the terminal d to a DIR terminal of the data bus selector 21. The high speed data bus is connected through the terminal c to the data bus selector 22, and the high speed DIR signal is supplied from the terminal e to a DIR terminal of the data bus selector 22.

The address bus selectors 19 and 20 may be uni-directional selectors formed from parts such as Texas Instruments 74LS244, and the data bus selectors 21 and 22 may be bi-directional selectors formed from parts such as Texas Instruments 74LS245. Texas Instruments part 74LS244 does not in itself function as a selector but as a uni-directional buffer. However, the selector function may be realised by the use of two parts 74LS244. Likewise, Texas Instruments part 74LS245 does not in itself function as a bi-directional selector but rather as a buffer, the selector function being obtained by the use of two parts 74LS245.

The operation of the present data processing apparatus will now be described for the case where the conventional low speed optional board 18b is mounted in the additional optional board slot 16 and the case where the high speed optional board 18a is mounted in the additional optional board slot 16, respectively.

When the low speed optional board 18b is mounted in the additional board slot 16, the micro-switch 17b remains in an open state because the low speed optional board has no member to engage the micro-switch 17b. In this case, a low level signal is applied to the gates of the address bus selector 19 and the data bus selector 21, and a high level signal is applied to the gates of the address bus selector 20 and the data bus selector 22. As a result, the address bus selector 19 and the data bus selector 21 are selected, and the system address bus and the system data bus are connected to the low speed optional board 18b.

On the other hand, when the high speed optional board 18a is mounted in the additional optional board slot 16, the member 17a engages the micro-switch 17b, so that the micro-switch 17b assumes a closed state. In this instance, a high level signal is applied to the gates of the address bus selector 19 and the data bus selector 21, and a low level signal is applied to the gate of the address bus selector 20. A low level signal is also applied to the gate of the data bus selector 22 as soon as a low level signal is supplied from the line 23. As a result, the address bus selector 20 and the data bus selector 22 are selected, and the high speed address bus and the high speed data bus are connected to the high speed optional board 18a.

In order to allow hybrid usage, in which the high speed signal and the low speed signal are selectively supplied to one slot, the signal which is produced when the high speed optional board uses the high speed data bus is supplied to the line 23 to inform the system controller 11 that the high speed data bus is in use so that appropriate control is ensured and use of the high speed data bus is inhibited except where needed.

In accordance with the present embodiment, the processing speed of the CPU is utilised to a maximum extent because the high speed address bus and the high speed data bus are directly connected to the CPU.

As described, the invention thus provides a compact form of data processing apparatus, which can nevertheless fulfil the requirement of supplying signals for operating either one of a conventional low speed additional optional board and a high speed additional optional board.

## Claims

1. Data processing apparatus having a slot (16) for accommodating an additional removable optional board (18), and characterised by a high speed signal line and a low speed signal line connected to a slot interface, and switching means (17, 19, 20, 21, 22) for selectively switching between said high speed signal line and said low speed signal line for output.

2. Data processing apparatus according to claim 1 characterised in that said high speed signal line includes a high speed address bus coupled to a CPU (8), and a high speed data bus coupled to the CPU.

3. Data processing apparatus according to claim 1 characterised in that the low speed signal line includes a system address bus connected to an address bus controller (9), and a system data bus connected to a data bus controller (10), the address bus controller and the data bus controller being coupled to a CPU (8).

4. Data processing apparatus according to any preceding claim characterised in that the switching means comprise at least one selector (19, 20, 21, 22) for selecting a respective one of the signal lines according to the state of a switching signal.

5. Data processing apparatus according to claim 4 when dependent from claim 2 characterised in that the at least one selector comprises a uni-directional selector (20) connected to the high speed address bus, and a bi-directional selector (22) connected to the high speed data bus.

6. Data processing apparatus according to claim 5 characterised in that the bi-directional selector is arranged to select the high speed data bus in response to the supply of an output signal from an optional board signifying that the high speed data bus is to be selected.

7. Data processing apparatus according to any preceding claim characterised in that the switching means comprise a switch (17).

8. Data processing apparatus according to claim 7 characterised in that the switch is provided adjacent the slot, and is operable by a member (17a) mounted on an optional board.

9. Data processing apparatus according to claim 7 when dependent from claim 4 characterised in that the switch is connected to the at least one selector.

F I G. 1

FIG. 2

FIG. 3